# EUROPÄISCHE PATENTSCHRIFT

(11) **EP 1 132 233 B1**
(45) Veröffentlichungstag und Bekanntmachung des Hinweises auf die Patenterteilung: **12.11.2003**
(21) Anmeldenummer: 01105324.6
(22) Anmeldetag: 07.03.2001
(51) Int. Cl.: B60J 1/20, B60J 1/00

(54) **Wasserdeflektor für eine Fahrzeugtür**
Water deflector for a vehicle door
Déflecteur d'eau pour porte de véhicule

(30) Priorität: 10.03.2000 DE 10011599
(43) Veröffentlichungstag der Anmeldung: 12.09.2001
(73) Patentinhaber: MAN Nutzfahrzeuge Aktiengesellschaft, 80976 München (DE)
(72) Erfinder: Engel, Alfred, 82278 Althegnenberg (DE); Hartung, Karsten, 42349 Wuppertal (DE); Jozwiak, Dariusz, 42389 Wuppertal (DE); Meyenbrock, Ludger, 42105 Wuppertal (DE)

(56) Entgegenhaltungen:
- EP-A- 0 860 328
- FR-A- 2 558 517
- US-A- 5 298 694

## Beschreibung

Die Erfindung betrifft einen Wasserdeflektor für eine Fahrzeugtür zur gezielten Ableitung von durch eine Fensterschachtdichtung in einen Türinnenraum eines Fahrzeugs eindringendem Wasser, gemäß dem Oberbegriff des unabhängigen Anspruchs 1.

Es ist bekannt, dass im allgemeinen Gebrauch eines Fahrzeugs Wasser in den Türinnenraum des Fahrzeugs eindringen kann, da die zwischen der Fensterscheibe und der Tür befindlichen Dichtungen das Eintreten von Wasser nicht vollständig aufhalten können, insbesondere wenn die Dichtungen im Laufe der Zeit verschleißen.

Da sich der Wassereintritt in die Tür nicht völlig verhindern lässt, hat man bisher lediglich im unteren Bereich der Tür Öffnungen zur Ausleitung des in die Tür eingedrungenen Wassers vorgesehen.

Solange in den Türen noch mechanische Bauteile vorgesehen waren, war dies unproblematisch. Durch den vermehrten Einbau elektrischer und elektronischer Einrichtungen, wie Türlautsprecher, elektrische Fensterheber, Alarmanlagen, elektrische Schließeinrichtungen usw., besteht jedoch die Gefahr, dass durch das in den Türinnenraum hineinströmende Wasser Kurzschlüsse hervorgerufen werden, die diese Bauteile beschädigen oder zerstören können. Auch der Einbau von Polstern aus porösen Kunststoffen und Textilverkleidungen auf der Türinnenseite lässt den Wunsch entstehen, Feuchtigkeit von diesem Bereich femzuhalten.

Ein gattungsgemäßer Wasserdeflektor ist aus der FR 2558517 A bekannt.

Es ist die Aufgabe der Erfindung, eine Vorrichtung zu schaffen, die es verhindert, dass in einen Türinnenraum eindringendes Wasser an auf Feuchtigkeit empfindliche Türeinbauten gelangt.

Die Aufgabe wird erfindungsgemäß durch einen Wasserdeflektor mit den Merkmalen des Anspruches 1 gelöst. Somit ist ein Wasserdeflektor für eine Fahrzeugtür zur gezielten Ableitung von durch eine Fensterschachtdichtung in einen Türinnenraum eindringendem Wasser vorgesehen, der einen zumindest an seiner Oberseite über zumindest einen Teil seiner Länge offenen Rinnenabschnitt mit einem Ablaufbereich sowie ein Befestigungsmittel zur Befestigung des Wasserdeflektors an der Tür umfasst, wobei der Rinnenabschnitt einen im wesentlichen ebenen Bodenabschnitt sowie zwei Randabschnitte aufweist und dabei ein Randabschnitt als seitlicher Steg und der andere Randabschnitt als Seitenwand ausgebildet ist.

Durch das Auffangen des in den Türinnenraum hineinströmenden Wassers in dem Rinnenabschnitt und das Ableiten desselben in Richtung der Außenseite der Tür sind gegenüber Feuchtigkeit empfindliche Türeinbauten vor Beschädigung oder Zerstörung geschützt.

Bei einer Weiterbildung der Erfindung ist das Befestigungsmittel an einem Ende, insbesondere an einem In bezug auf den Ablaufbereich entgegengesetzten Ende des Rinnenabschnitts vorgesehen. Durch diese Anordnung des Befestigungsmittels lässt sich der Wasserdeflektor an dem für die Funktionsweise besonders günstigen Bereich einer Fensterscheibenbefestigung der Tür anbringen.

Das Befestigungsmittel weist bevorzugt einen Rastmechanismus auf. Auf diese Weise lässt sich der Wasserdeflektor leicht von Hand ohne zusätzliches Werkzeug an der Tür verrasten.

Besonders bevorzugt ist es, daß das Befestigungsmittel einen geschlossenen Querschnitt aufweist. Die Steifigkeit des Wasserdeflektors wird auf diese Weise erhöht.

Eine Ausführungsform des Wasserdeflektors umfaßt ein Befestigungsmittel mit einer Zunge, die sich von dem Befestigungsmittel aus in einer der Erstreckungsrichtung des Rinnenabschnitts entgegengesetzten Richtung erstreckt. Die Zunge ermöglicht eine sichere Fixierung des Wasserdeflektors in seiner Einbaulage.

Bei einer weiteren Ausführungsform ist der Wasserdeflektor einstückig ausgebildet, wodurch eine wirtschaftliche Herstellung möglich ist.

Die Erfindung betrifft außerdem ein Türmodul für eine Fahrzeugtür mit einer Fensterscheibe, einer Fensterscheibenbefestigung, einem Fensterhebersystem, mit dem die Fensterscheibenbefestigung verbunden ist, und einem Wasserdeflektor.

Bei einer Ausführungsform des Türmoduls ist der Wasserdeflektor mit der Fensterscheibenbefestigung verbunden. Diese Anbringung des Wasserdeflektors gestattet es, daß er sich bei Verstellung der Fensterscheibe mit dieser mitbewegt. Auf diese Weise ist in jedem Fall eine optimale Ableitung von eindringendem Wasser gewährleistet, da sich der Wasserdeflektor zu jeder Zeit in unmittelbarer Nähe des Fensterbereiches befindet, in dem das eintretende Wasser normalerweise ins Innere der Tür tropfen würde.

Bevorzugte Ausführungsformen der Erfindung sind auch in den Unteransprüchen, der Beschreibung sowie den Zeichnungen angegeben.

Die Erfindung wird im folgenden beispielhaft unter Bezugnahme auf die Zeichnungen beschrieben. Es zeigen:
- Fig. 1: einen Wasserdeflektor zum Einbau in ein Türmodul gemäß einer Ausführungsform der Erfindung,
- Fig. 2: den Wasserdeflektor von Fig. 1 in einem an einer Fensterscheibenbefestigung des Türmoduls verrasteten Zustand und
- Fig. 3: den Wasserdeflektor der Fig. 1 bzw. 2 in seiner Einbaulage in dem Türmodul bei in die Fensterscheibenbefestigung eingesetzter Fensterscheibe.

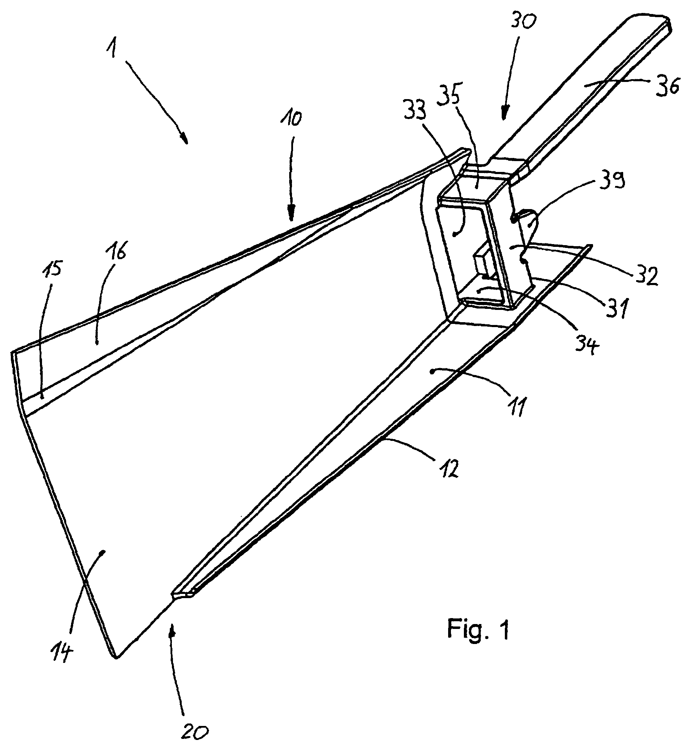

Nach Fig. 1 umfaßt ein erfindungsgemäßer Wasserdeflektor 1 einen Rinnenabschnitt 10 mit einem Ablaufbereich 20 sowie ein Befestigungsmittel 30. Der Rinnenabschnitt 10 weist einen ebenen Bodenabschnitt 11 und zwei Randabschnitte 12, 14 auf, wobei ein Randabschnitt 12 als seitlicher Steg 12 und der andere Randabschnitt als Seitenwand 14 ausgebildet ist. Die Seitenwand 14 ist an einem in bezug auf den Bodenabschnitt 11 fernen Rand mehrfach abgewinkelt und bildet entsprechend zwei Abwinklungen 15, 16. Die Höhe der Seitenwand 14 beträgt in etwa die zweifache Breite des Bodenabschnitts 11, wohingegen der Steg 12 zur Materialeinsparung lediglich eine Höhe von wenigen Millimetern aufweist. Die Wandstärke des Randabschnitts, des Bodenabschnitts und der Seitenwand ist in etwa gleich und beträgt wenige Millimeter.

Der Bodenabschnitt 11 ist in Richtung eines Endes verjüngt. An diesem Ende erstreckt sich die Seitenwand 14 über eine Länge, die in etwa der maximalen Breite des Bodenabschnitts 11 entspricht, über den Bodenabschnitt hinaus. Der durch die Verlängerung der Seitenwand 14 und das spitze Ende des Bodenabschnitts 11 gebildete Bereich ist der Ablaufbereich 20 für das von dem Wasserdeflektor 1 aufgefangene Wasser.

Am entgegengesetzten Ende des Wasserdeflektors 1 ist ein Befestigungsmittel 30 vorgesehen, das einen kastenförmigen Hülsenabschnitt 31 mit geschlossenem Querschnitt aufweist. Der Hülsenabschnitt 31 ist in Erstreckungsrichtung des Rinnenabschnitts 10 auf beiden Seiten offen und besitzt einen ersten langen Schenkel 33, der durch die Seitenwand 14 gebildet ist, und einen ersten kurzen Schenkel 34, der auf dem Bodenabschnitt 11 aufsitzt. Der Bodenabschnitt 11 ist in einer der Erstreckungsrichtung des Rinnenabschnitts 10 entgegengesetzten Richtung über das Befestigungsmittel 30 hinaus geradlinig verlängert und etwas breiter als der erste kurze Schenkel 34 des Hülsenabschnitts 31. An einem der Seitenwand 14 gegenüberliegenden zweiten langen Schenkel 32 des Hülsenabschnitts 31 ist ein Rastmechanismus 39 vorgesehen. Ein dem ersten kurzen Schenkel 34 gegenüberliegender zweiter kurzer Schenkel 35 weist eine Zunge 36 auf, die sich von dem Befestigungsmittel 30 aus in einer der Erstreckungsrichtung des Rinnenabschnitts 10 entgegengesetzten Richtung in etwa parallel zum Bodenabschnitt 11 über eine Länge erstreckt, die in etwa der halben Länge der Seitenwand 14 entspricht. Die Zunge 36 ist etwas schmaler als die Länge der kurzen Schenkel 34, 35 des Hülsenabschnitts 31 und weist eine Dicke auf, die etwa der doppelten Wandstärke der Schenkel 34, 35 entspricht. Die Wandstärke der Schenkel 34, 35 beträgt wiederum etwa das zweifache der Wandstärke der Seitenwand 14.

Der Rinnenabschnitt 10 und das Befestigungsmittel 30 sind einstückig aus Kunststoff hergestellt.

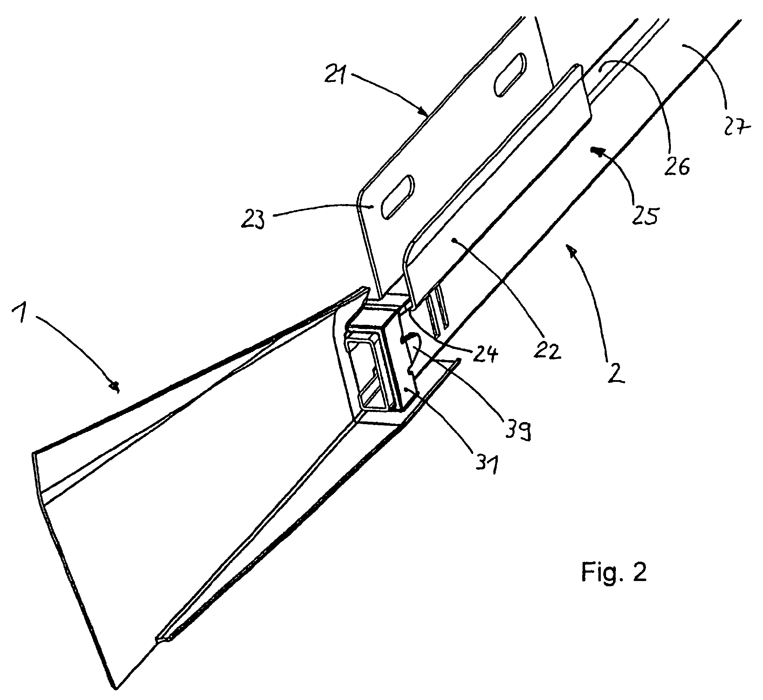

Fig. 2 zeigt den auf eine Fensterscheibenbefestigung 2 aufgesteckten Wasserdeflektor 1. Die Fensterscheibenbefestigung 2 besteht aus einem Aufnahmeabschnitt 21 für eine Fensterscheibe und einem Profilelement 25, das mit einem Fensterhebersystem, nicht gezeigt, verbunden ist.

Der Aufnahmeabschnitt 21 besteht aus einem U-förmigen Profil mit einem kurzen, am freien Rand etwas nach außen abgewinkelten Schenkel 22 einem langen Schenkel 23 sowie einem Verbindungssteg 24, zwischen dcnen eine Fensterscheibe, nicht gezeigt, aufgenommen sein kann. Der Aufnahmeabschnitt 21 ist auf einer Schmalseite 26 des Profilelements 25 etwas in Längsrichtung versetzt befestigt, so daß sich ein Ende des Profilelements 25 über den Aufnahmeabschnitt 21 hinaus erstreckt. Im Bereich dieses Endes befindet sich an einer rechtwinklig zur Schmalseite 26 angeordneten Breitseite 27 des Profilelements 25 eine in der Zeichnung nicht sichtbare Aussparung zur Verrastung mit dem Rastmechanismus 39 des Wasserdeflektors 1.

Der Hülsenabschnitt 31 des Befestigungsmittels ist auf das freie Ende des Profilelements 25 geschoben, wobei der Rastmechanismus 39 mit der Aussparung verrastet ist. Die Zunge 36 des Befestigungsmittels 30 liegt dabei zwischen den beiden Schenkeln 22, 23 des Aufnahmeabschnitts 21.

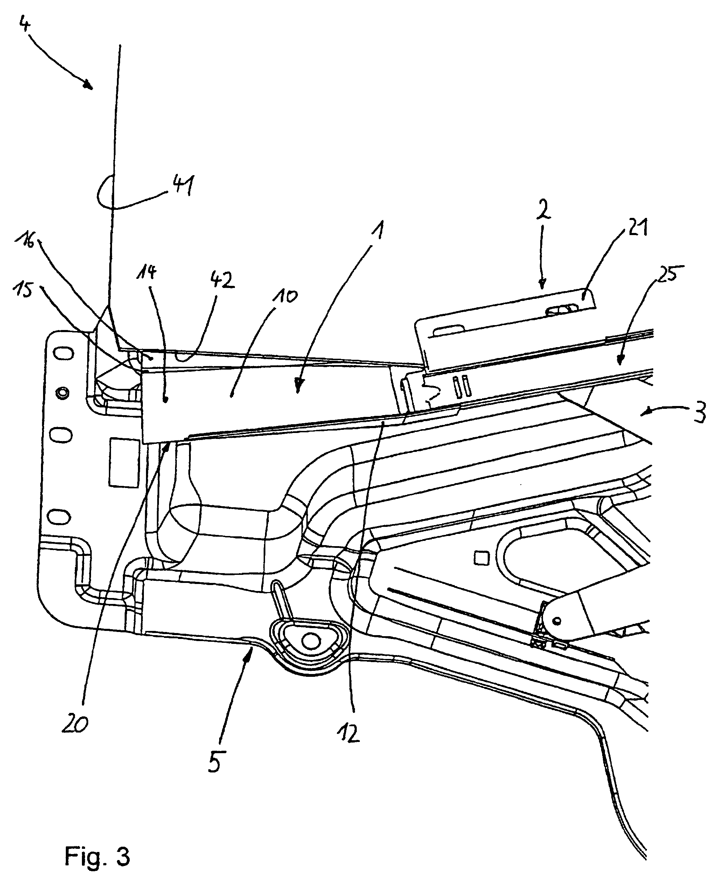

Fig. 3 zeigt das gesamte Türmodul mit dem auf das Profilelement 25 gesteckten Wasserdeflektor 1, einer in den Aufnahmeabschnitt 21 eingesetzten Fensterscheibe 4 sowie einem mit der Fensterbefestigung 2 verbundenen Fensterhebersystem 3. Das Türmodul ist an einem Träger 5 angebracht, über den dieses in die Fahrzeugtür eingebaut werden kann.

Ein stirnseitiges Ende des Rinnenabschnitts 10 des Wasserdeflektors 1 liegt in der Nähe einer Stirnseite 41 der Fensterscheibe, wobei sich die Stirnseite 41 der Fensterscheibe 4 in Erstreckungsrichtung des Wasserdeflektors 1 etwas über diesen hinaus erstreckt.

Die Seitenwand 14 des Rinnenabschnitts 10 erstreckt sich über einen unteren Rand 42 der Fensterscheibe 4 hinaus, wobei sie an dem in bezug auf einen Bodenabschnitt 11 fernen Rand in Richtung der Fensterscheibe 4 abgewinkelt ist und die zwei Abwinklungen 15, 16 bildet.

In diesem Einbauzustand ist die Zunge 36 des Befestigungsmittels 30 zwischen den Schenkeln 22, 23 des Aufnahmeabschnitts 21 sowie zwischen dem Verbindungssteg 24 der Schenkel 22, 23 und dem unteren Rand 42 der Fensterscheibe 4 festgelegt.

In Betrieb, wenn das Türmodul mit der Fensterscheibe 4 in ein Fahrzeug eingebaut ist, läuft Wasser, das durch Regen oder Reinigung des Fahrzeugs mit einem Dampfstrahler an das Fenster 4 und den angrenzenden Türbereich gelangt und zwischen Fensterschachtdichtung und Fenster 4 hindurchtritt, entlang der Stirnflächen und Seitenflächen des Fensters nach unten ab und tropft in den Rinnenabschnitt 10 hinein. Wasser, das in den Bereich der Fensterbefestigung 2 gelangt, strömt entlang des Profilelements 25 in Richtung des Wasserdeflektors 1 und schließlich in diesen hinein. Durch das Gefälle, das der Bodenabschnitt 11 des Wasserdeflektors 1 in Einbaulage aufweist, kann das aufgefangene Wasser in Richtung des Ablaufbereichs 20 fließen und von dort nach unten in einen tiefer liegenden Bereich der Tür, nicht dargestellt, abgeleitet werden, von wo es über geeignet angeordnete Öffnungen die Tür verlassen kann. Auf diese Weise gelangt kein Wasser an den Bereich der Fahrzeugtür, an dem beispielsweise elektrisch betätigte Einrichtungen vorhanden sind, der zumeist in der Nähe des Fensterhebersystems 3 liegt.

Der Wasserdeflektor kann auch auf andere Weise ausgeführt sein. Das Befestigungsmittel kann, je nach Ausgestaltung der Fensterscheibenbefestigung andersartig ausgebildet sein. Es ist beispielsweise möglich, das Befestigungsmittel mit der Fensterscheibenbefestigung über eine Klammer zu verbinden oder auch eine Schraubverbindung zu wählen.

Es ist prinzipiell möglich, den Wasserdeflektor als Preßteil aus Blech herzustellen.

### Bezugszeichenliste

- 1: Wasserdeflektor
- 2: Fensterscheibenbefestigung
- 3: Fensterhebersystem
- 4: Fensterscheibe
- 5: Träger
- 10: Rinnenabschnitt
- 11: Bodenabschnitt
- 12: Steg
- 14: Seitenwand
- 15: Abwinklung
- 16: Abwinklung
- 20: Ablaufbereich
- 21: Aufnahmeabschnitt
- 22: Schenkel
- 23: Schenkel
- 24: Verbindungssteg
- 25: Profilelement
- 26: Schmalseite
- 27: Breitseite
- 30: Befestigungsmittel
- 31: Hülsenabschnitt
- 32: langer Schenkel
- 33: langer Schenkel
- 34: kurzer Schenkel
- 35: kurzer Schenkel
- 36: Zunge
- 39: Rastmechanismus

## Patentansprüche

1. Wasserdeflektor (1) für eine Fahrzeugtür zur gezielten Ableitung von durch eine Fensterschachtdichtung in einen Türinnenraum eindringendem Wasser, der einen zumindest an seiner Oberseite über zumindest einen Teil seiner Länge offenen Rinnenabschnitt (10) mit einem Ablaufbereich (20) sowie ein Befestigungsmittel (30) zur Befestigung des Wasserdeflektors (1) an der Tür umfaßt, **dadurch gekennzeichnet, dass** der Rinnenabschnitt (10) einen im wesentlichen ebenen Bodenabschnitt (11) sowie zwei Randabschnitte aufweist, wobei ein Randabschnitt als seitlicher Steg (12) und der andere Randabschnitt als Seitenwand (14) ausgebildet ist.

2. Wasserdeflektor nach Anspruch 1, **dadurch gekennzeichnet, dass** der Ablaufbereich (20) an einem Ende des Rinnenabschnitts (10) vorgesehen ist.

3. Wasserdefleketor nach Anspruch 1 oder Anspruch 2, **dadurch gekennzeichnet, dass** der Rinnenabschnitt (10) im Ablaufbereich (20) nach unten und/oder zu einer Stirnseite hin offen ist

4. Wasserdeflektor nach einem der vorhergehenden Ansprüche, **dadurch gekennzeichnet, dass** das Befestigungsmittel (30) an einem in bezug auf den Ablaufbereich (20) entgegengesetzten Ende des Rinnenabschnitts (10) vorgesehen ist.

5. Wasserdeflektor nach einem der vorhergehenden Ansprüche, **dadurch gekennzeichnet, dass** das Befestigungsmittel (30) einen Rastmechanismus (39) aufweist.

6. Wasserdeflektor nach einem der vorhergehenden Ansprüche, **dadurch gekennzeichnet, dass** das Befestigungsmittel (30) einen geschlossenen Querschnitt (31) aufweist.

7. Wasserdeflektor nach einem der vorhergehenden Ansprüche, **dadurch gekennzeichnet, dass** das Befestigungsmittel (30) eine Zunge (36) aufweist, die sich von dem Befestigungsmittel (30) aus in einer der Erstreckungsrichtung des Rinnenabschnitts (10) entgegengesetzten Richtung erstreckt.

8. Wasserdeflektor nach einem der vorhergehenden Ansprüche, **dadurch gekennzeichnet, dass** dieser einstückig ausgebildet ist.

9. Wasserdeflektor nach einem der vorhergehenden Ansprüche 1 bis 8, **dadurch gekennzeichnet, dass** der Bodenabschnitt (11) in Richtung des einen Endes verjüngt ist.

10. Wasserdeflektor nach einem oder mehreren der vorhergehenden Ansprüchen 1 bis 9, **dadurch gekennzeichnet, dass** sich die Seitenwand (14) über den Bodenabschnitt (11) hinaus erstreckt.

11. Wasserdeflektor nach einem der vorhergehenden Ansprüche 1 bis 10, **dadurch gekennzeichnet dass** die Seitenwand (14) an einem in bezug auf den Bodenabschnitt (11) fernen Rand abgewinkelt (15, 16) ist.

12. Wasserdeflektor nach einem der vorhergehenden Ansprüche 1 bis 11, **dadurch gekennzeichnet, dass** der Bodenabschnitt (11) über das Befestigungsmittel (30) hinaus verlängert ist.

13. Wasserdeflektor (1) nach einem der vorhergehenden Ansprüche 1 bis 12, **dadurch gekennzeichnet, dass** dieser Bestandteil eines Türmoduls für eine Fahrzeugtür ist, welches mit einer Fensterscheibe (4), einer Fensterscheibenbefestigung (2) und einem hiermit verbundenen Fensterhebersystem (3) ausgestattet ist.

14. Wasserdeflektor nach Anspruch 13, **dadurch gekennzeichnet, dass** der Wasserdeflektor (1) mit der Fensterscheibenbefestigung (2) verbunden ist.

15. Wasserdeflektor nach Anspruch 13 oder Anspruch 14, **dadurch gekennzeichnet, dass** die Zunge (36) des Befestigungsmittels (30) des Wasserdeflektors (1) zwischen dem Fenster (4) und der Fensterscheibenbefestigung (2) angeordnet ist.

16. Wasserdeflektor nach einem der Ansprüche 13 bis 15, **dadurch gekennzeichnet, dass** das Befestigungsmittel (30) des Wasserdeflektors (1) mit der Fensterscheibenbefestigung (2) verrastet ist.

17. Wasserdeflektor nach einem der Ansprüche 13 bis 16, **dadurch gekennzeichnet, dass** sich die Seitenwand (14) des Rinnenabschnitts (10) des Wasserdeflektors (1) über einen unteren Rand (42) der Fensterscheibe (4) hinaus erstreckt.

18. Wasserdeflektor nach einem der Ansprüche 13 bis 17, **dadurch gekennzeichnet, dass** die Seitenwand (14) des Rinnenabschnitts (10) des Wasserdeflektors (1) an dem in bezug auf den Bodenabschnitt (11) fernen Rand in Richtung der Fensterscheibe (4) abgewickelt (15, 16) ist.

19. Wasserdeflektor nach einem der Ansprüche 13 bis 18, **dadurch gekennzeichnet, dass** ein stimseitiges Ende des Rinnenabschnitts (10) des Wasserdeflektors (1) in der Nähe eines stimseitigen Endes der Fensterscheibe (4) liegt.

## Claims

1. Water deflector (1) for a vehicle door for purposefully draining away water penetrating into a door interior through a window-channel seal, which water deflector (1) comprises an open channel section (10) located at least on the top side of said deflector (1), extending over at least a portion of its length and having a drain area (20) and a fastener (30) for fastening said water deflector (1) to the door, **characterised in that** the channel section (10) has an essentially level bottom section (11) and two edge sections, one edge section being designed as a lateral web (12) and the other as a side wall (14).

2. Water deflector according to Claim 1, **characterised in that** the drain area (20) is provided at one end of the channel section (10).

3. Water deflector according to Claim 1 or Claim 2, **characterised in that** in the drain area (20) the channel section (10) is open downwards and/or towards a front face.

4. Water deflector according to one of the foregoing Claims, **characterised in that** the fastener (30) is arranged at an end of the channel section (10), which end is opposite to the drain area (20).

5. Water deflector according to one of the foregoing Claims, **characterised in that** the fastener (30) has a locking mechanism (39).

6. Water deflector according to one of the foregoing Claims, **characterised in that** the fastener (30) has a closed cross-section (31).

7. Water deflector according to one of the foregoing Claims, **characterised in that** the fastener (30) has a tongue (36) extending from said fastener (30) in the direction opposite to the direction in which the channel section (10) extends.

8. Water deflector according to one of the foregoing Claims, **characterised in that** said water deflector is a single piece.

9. Water deflector according to one of the foregoing Claims 1 to 8, **characterised in that** the bottom section (11) tapers off towards the one end.

10. Water deflector according to one or several of the foregoing Claims 1 to 9, **characterised in that** the side wall (14) extends beyond the bottom section (11).

11. Water deflector according to one of the foregoing Claims 1 to 10, **characterised in that** the side wall (14) angles off (15, 16) at an edge distant to the floor section (11).

12. Water deflector according one of the foregoing Claims 1 to 11, **characterised in that** the bottom section (11) is extended beyond the fastener (30).

13. water deflector according to one of the foregoing Claims 1 to 12, **characterised in that** said water deflector is an integral part of a door module for a vehicle door, which door module is equipped with a window pane (4), a window pane fastener (2) and window lifting system connected with said window pane fastener (2).

14. Water deflector according to Claim 13, **characterised in that** the water deflector (1) is connected with the window pane fastener (2).

15. Water deflector according to Claim 13 or Claim 14, **characterised in that** the tongue (36) of the fastener (30) for the water deflector (1) is arranged between the window (4) and the window pane fastener (2).

16. Water deflector according to one of the Claims 13 to 15, **characterised in that** the fastener (30) for the water deflector (1) is interlocked with the window pane fastener (2).

17. Water deflector according to one of the Claims 13 to 16, **characterised in that** the side wall (14) of the channel section (10) of the water deflector (1) extends beyond a lower edge (42) of the window pane (4).

18. Water deflector according to one of the foregoing Claims 13 to 17, **characterised in that** at the edge distant to the bottom section (11) the side wall (14) of the channel section (10) of the water deflector (1) angles off (15, 16) in the direction of the window pane (4).

19. Water deflector according to one of the Claims 13 to 18, **characterised in that** one end face of the channel section (10) of the water deflector (1) is arranged in the vicinity of an end face of the window pane (4).

## Revendications

1. Déflecteur d'eau (1) pour une porte de véhicule visant à dévier de manière ciblée l'eau pénétrant dans l'intérieur de la porte par le joint du puits de glace, comprenant un canal d'écoulement (10) ouvert au moins au niveau de sa partie supérieure au-dessus au moins d'une partie de sa longueur avec une zone d'écoulement (20) ainsi qu'un moyen de fixation (30) pour permettre la fixation du déflecteur d'eau (1) sur la porte, **caractérisé par le fait que** le canal d'écoulement (10) présente une pièce de fond (11) pour l'essentiel plate ainsi que deux pièces de délimitation, auquel cas une pièce de délimitation est fermée en tant que bord latéral (12) et l'autre pièce de délimitation en tant que paroi latérale (14).

2. Déflecteur d'eau selon la revendication 1, **caractérisé par le fait que** la zone d'écoulement (20) est prévue à une extrémité du canal d'écoulement (10).

3. Déflecteur d'eau selon la revendication 1 ou 2, **caractérisé par le fait que** le canal d'écoulement (10) est ouvert vers le bas et/ou vers la face AV dans la zone d'écoulement (20).

4. Déflecteur d'eau selon l'une des revendications énoncées précédemment, **caractérisé par le fait que** le moyen de fixation (30) est prévu à une extrémité opposée par rapport à la zone d'écoulement (20) du canal d'écoulement (10).

5. Déflecteur d'eau selon l'une des revendications énoncées précédemment, **caractérisé par le fait que** le moyen de fixation (30) présente un mécanisme d'enclenchement.

6. Déflecteur d'eau selon l'une des revendications énoncées précédemment, **caractérisé par le fait que** le moyen de fixation (30) présente une section transversale fermée.

7. Déflecteur d'eau selon l'une des revendications énoncées précédemment, **caractérisé par le fait que** le moyen de fixation (30) présente une languette (36) qui s'étend à partir du moyen de fixation (30) dans le sens opposé au sens d'extension du canal d'écoulement (10).

8. Déflecteur d'eau selon l'une des revendications énoncées précédemment, **caractérisé par le fait que** celui-ci est formé d'un seul élément.

9. Déflecteur d'eau selon l'une des revendications 1 à 8 énoncées précédemment, **caractérisé par le fait que** la pièce de fond (11) est rétrécie dans le sens d'une extrémité.

10. Déflecteur d'eau selon l'une des revendications 1 à 9 énoncées précédemment, **caractérisé par le fait que** la paroi latérale (14) s'étend au-delà de la pièce de fond (11).

11. Déflecteur d'eau selon l'une des revendications 1 à 10 énoncées précédemment, **caractérisé par le fait que** la paroi latérale (14) est pliée (15, 16) au niveau d'un bord éloigné par rapport à la pièce de fond (11).

12. Déflecteur d'eau selon l'une des revendications 1 à 11 énoncées précédemment, **caractérisé par le fait que** la pièce de fond (11) est prolongée au-delà du moyen de fixation (30).

13. Déflecteur d'eau selon l'une des revendications 1 à 12 énoncées précédemment, **caractérisé par le fait que** cette pièce intégrante du module de porte est prévue pour une porte de véhicule, lequel est équipé d'une glace de baie (4), d'une fixation de glace de baie (2) et d'un système de lève-glace (3) relié à celle-ci.

14. Déflecteur d'eau selon la revendication 13, **caractérisé par le fait que** le déflecteur d'eau (1) est relié à la fixation de la glace de baie (2).

15. Déflecteur d'eau selon l'une des revendications 13 ou 14, **caractérisé par le fait que** la languette (36) du moyen de fixation (30) du déflecteur d'eau (1) est disposée entre la baie (4) et la fixation de la glace de baie (2).

16. Déflecteur d'eau selon l'une des revendications 13 à 15, **caractérisé par le fait que** le moyen de fixation (30) du déflecteur d'eau (1) est enclenché avec la fixation de la glace de baie (2).

17. Déflecteur d'eau selon l'une des revendications 13 à 16, **caractérisé par le fait que** la paroi latérale (14) du canal d'écoulement (10) du déflecteur d'eau (1) s'étend au-delà d'un bord inférieur (42) de la glace de baie (4).

18. Déflecteur d'eau selon l'une des revendications 13 à 17, **caractérisé par le fait que** la paroi latérale (14) du canal d'écoulement (10) du déflecteur d'eau (1) est pliée (15, 16) au niveau du bord éloigné par rapport à la pièce de fond (11) en direction de la glace de baie (4).

19. Déflecteur d'eau selon l'une des revendications 13 à 18, **caractérisé par le fait qu'**une extrémité côté AV du canal d'écoulement (10) du déflecteur d'eau (1) se trouve à proximité de l'extrémité côté AV de la glace de baie (4).
